# EUROPÄISCHE PATENTANMELDUNG

(11) **EP 0 760 275 A2**
(43) Veröffentlichungstag der Anmeldung: **05.03.1997**
(21) Anmeldenummer: 96113897.1
(22) Anmeldetag: 30.08.1996
(51) Int. Cl.: B29C 33/50, B29C 43/20, B29D 23/00

(54) **Heizbalg aus Gummi für die Vulkanisation von Reifen oder Luftfedern**

(30) Priorität: 01.09.1995 DE 19532217
(71) Anmelder: Continental Aktiengesellschaft, 30165 Hannover (DE)
(72) Erfinder: Kramer, Karl-Heinz, 30419 Hannover (DE); Entmayr, Peter, Dr., 30938 Burgwedel (DE); Behling, Helmut, 30453 Hannover (DE); Kampmann, Udo, 30823 Garbsen (DE); Völkening, Ernst, 31683 Obernkirchen (DE)

(57) **Zusammenfassung**

Die Erfindung betrifft einen Heizbalg aus Gummi und ein Verfahren zur Herstellung von einem Heizbalg aus Gummi.

Um einen Heizbalg mit besseren Eigenschaften bereitzustellen, wird vorgeschlagen, daß der Heizbalg aus mindestens zwei verschiedenen Schichten (A' und B') aus Gummi aufgebaut ist.

## Beschreibung

Die Erfindung betrifft einen Heizbalg aus Gummi und ein Verfahren zur Herstellung von einem Heizbalg aus Gummi.

Heizbälge haben bei der Vulkanisation die Aufgabe, das Druckmedium, z. B. heißes Wasser oder Dampf, aufzunehmen und den Druck sowie Temperatur auf die Innenwand des zu vulkanisierenden Gegenstandes zur Ausformung dessen zu übertragen. Um diese Aufgabe möglichst lang und gut erfüllen zu können, werden bestimmte Anforderungen an die Qualität des Heizbalges gestellt. So muß er bei der im allgemeinen recht hohen Vulkanisationstemperatur (> 200°C) einer hohen Dehnungsbeanspruchung standhalten.

Bisher wird der gesamte Heizbalg aus einer einzigen im allgemeinen Butylkautschukmischung hergestellt. Diese Kautschukmischung auf Butylbasis muß allen Beanspruchungen (Dehnbarkeit bei Vulkanisationstemperaturen, Druck-, Hitze- und Heißdampffestigkeit, Rißbeständigkeit), denen ein Heizbalg ausgesetzt ist, gerecht werden. Da aber eine einzige Butylkautschukmischung all diese Anforderungen nicht erfüllen kann, ist die Lebensdauer eines Heizbalges begrenzt.

Der Erfindung liegt die Aufgabe zugrunde, Heizbälge mit besseren Eigenschaften bereitzustellen.

Gelöst wird diese Aufgabe dadurch, daß der Heizbalg aus mindestens zwei verschiedenen Schichten aus Gummi aufgebaut ist.

Über den schichtenweisen Aufbau eines Heizbalges kann eine gezielte Beeinflussung der Heizbalgeigenschaften erreicht werden.

Während des Formgebungsprozesses des Heizbalges, nämlich z.B. beim Entformungsvorgang, erweist sich ein schichtenweiser Aufbau als Vorteil. Beim Entformungsvorgang muß im allgemeinen der Heizbalg über den Metallkern, der zur Formgebung des Heizbalges erforderlich ist, gezogen werden. Dabei muß die engere Öffnung des Heizbalges sich so weit dehnen, daß sie über den größeren Durchmesser des Metallkerns paßt. Da die herkömmlichen Heizbälge im allgemeinen nur aus einer einzigen vulkanisierten Butylkautschukmischung bestehen und diese im vulkanisierten Zustand nur eine bestimmte Dehnung zuläßt, sind an fertigen Heizbälgen häufig Risse im Wulstbereich vorhanden, die auf eine Überdehnung während des Entformungsvorganges zurückzuführen sind. Diese Risse bedeuten eine Qualitätseinbuße bei der Herstellung von Heizbälgen.

Deshalb ist es z. B. besonders vorteilhaft, wenn der Heizbalg im Bereich der Heizbalgöffnungen und im Zenitbereich aus verschiedenen Schichten aus Gummi aufgebaut ist. Verfahrenstechnisch günstig ist auch die Variante, daß die obere und die untere Hälfte des Heizbalges (parallel zur Heizbalgöffnung) aus zwei unterschiedlichen Schichten aus Gummi besteht. Dabei wird es nämlich möglich, zumindest im Wulstbereich (Bereich der Heizbalgöffnung) einer Heizbalghälfte den Heizbalg aus einer Schicht mit einem hochtemperaturdehnbaren Material aus Gummi auszustatten, damit die Heizbalgdefekte bezüglich der Risse, die auf einer Überdehnung beim Entformungsvorgang beruhen, verringert werden.

Als zweite Schicht kann ein für einen Heizbalg bisher schon üblicher Gummi verwendet werden.

Es ist natürlich auch möglich, daß der Heizbalg aus mehreren von oben nach unten angeordneten bzw. in radialer Richtung zueinander verlaufenden Schichten aufgebaut ist, die aus unterschiedlichen oder sich wiederholenden Schichtmaterialien bestehen.

Es ist von Vorteil, wenn der Heizbalg aus mindestens zwei verschiedenen Schichten aufgebaut ist, die radial zueinander verlaufen.

Ein so aufgebauter Heizbalg erweist sich bei der Vulkanisation von Reifen oder Luftfedern als günstig. Denn so kann z. B. die radial äußere Schicht des Heizbalges, aus Gummi hergestellt werden, der schwefelresistent und/oder -undurchlässiger als herkömmliche Heizbalgmaterialien ist. Bei dem bisher verwendeten Butylkautschuk konnte Schwefel, der bei der Vulkanisation von Reifen nicht verbraucht wurde, in den Heizbalg eindiffundieren und somit eine vorzeitige Alterung des Heizbalges hervorrufen. Insbesondere wirkt sich das bei einer schwefelresistenten radial äußeren Schicht des Heizbalges aus, da diese im allgemeinen mit dem zu vulkanisierenden Gegenstand (Reifen, Luftfeder) in Kontakt kommt.

Für die radial innere Schicht des erfindungsgemäßen Heizbalges, die mit dem Druckmedium (Dampf, Wasser) direkt in Kontakt kommt, ist es vorteilhaft, wenn diese hitzebeständig und wasser- und/oder dampfundurchlässig und/oder -resistent ist. Des weiteren sollte diese Heizbalgschicht eine gute Hochtemperaturdehnbarkeit aufweisen, um eine optimale Aufnahme des Druckmediums zu gewährleisten und somit eine gute Ausformung des zu vulkanisierenden Gegenstandes (Reifen, Luftfeder) zu erzielen.

Verfahrenstechnisch am günstigsten ist, wenn die radial innere und die radial äußere Schicht aus einer Gummimischung bestehen. Die Dimensionierung des aus Schichten aufgebauten Heizbalgrohlings ist somit leichter. Des weiteren ergibt sich aus den Fließeigenschaften der Kautschukmischung, daß die Wandungen der Vulkanisierform, (Wandung der oberen und unteren Formhälfte und des Metallkerns), die die äußere Geometrie des Heizbalges bestimmen, durch die zuerst eingebrachte Heizbalgrohlingsmasse bedeckt werden. Daraus resultiert im einfachsten Fall, daß die innere und die äußere Wand des fertigen Heizbalges aus ein und derselben Gummimischung bestehen.

Als Schicht zwischen der radial inneren und äußeren Schicht des Heizbalges eignet sich eine Gummimischung, die gute Druck- und Zugverformungseigenschaften aufweist, um möglichst viele Vulkanisationsvorgänge durchzustehen, ohne Ermüdungserscheinungen zu zeigen.

Prinzipiell ist es natürlich auch möglich, daß die radial äußere und die radial innere Schicht des Heizbalges aus verschiedenen Gummimischungen bestehen. Um das zu erzielen, ist es denkbar, daß eine Wandung der Vulkanisierform (z.B. Wandung des Metallkerns) besonders aufgeraut ist und die andere Wandung (Wandung der oberen und unteren Formenhälfte) besonders glatt ist. Das hätte zur Folge, daß durch die Schließkräfte die Heizbalgrohlingsmasse, die zuerst in die Vulkanisierform eingepreßt wird, nur an der Wandung des Metallkerns haften bleibt, da sie an der Wandung der oberen und unteren Formenhälfte vorbeigleitet. Die als nächste eingebrachte Heizbalgrohlingsmassenschicht lagert sich in der Vulkanisierform auf der Schicht, die an der Wandung des Metallkerns haftet an und füllt den restlichen Hohlraum der Vulkanisierform bis hin zur Wandung der oberen und unteren Formenhälfte aus. Damit werden Heizbälge erzielt, die eine unterschiedliche radial innere und radial äußere Gummischichten aufweist. Die Eigenschaften dieser beiden Schichten kann an die Gebrauchsanforderungen des Heizbalges angepaßt werden.

Durch den erfindungsgemäßen schichtenweisen Aufbau des Heizbalges wird eine Eigenschaftsoptimierung desselbigen erzielt. Im Unterschied zu bisherigen Heizbälgen, bei denen versucht wurde, die Eigenschaftsdefizite durch Materialstärke des Gummis auszugleichen, kann mit dem erfindungsgemäßen Schichtaufbau eine genaue Eigenschaftsfixierung am Heizbalg erreicht und somit der Verbrauch von Kautschuk- bzw. Gummimaterial gesenkt werden.

Damit ein schichtenweiser Aufbau des Heizbalges möglich wird, ist es erforderlich, solche Schichtkombinationen zu wählen, die aufgrund ihrer chemischen und physikalischen Eigenschaften dafür geeignet sind.
So müssen die Schichten fließfähig und miteinander "verträglich" sein, d.h. daß durch den Vulkanisationsprozeß bei der Heizbalgherstellung überhaupt ein Schichtenverbund entsteht.

Des weiteren spielen Konstruktionstyp der Heizbalgherstellungsform bzw. das für die Herstellung des Heizbalges angewendete Verfahren eine Rolle. Prinzipiell sind alle bekannten Verfahren zur Herstellung des schichtenweise aufgebauten Heizbalges geeignet, bei denen ermöglicht wird, daß die in die Vulkanisierform zuerst eingeführte Rohlingsmasse an der Wandung der Vulkanisierform haftet. Möglichkeiten zur Adhäsionsunterstützung an der Vulkanisierform kann z. B. ein Aufrauhen ihrer Wandung sein.

Für die Erzielung des erfindungsgemäßen Aufbaus von Heizbälgen kann vorteilhafterweise das Transfer-Moulding-Verfahren angewendet werden. Dazu wird der z. B. durch ein Extrusionverfahren erhältliche aus mindestens zwei verschiedenen Kautschukmischungsschichten aufgebaute Heizbalgrohling ringförmig in die Vulkanisierform gelegt. Durch Schließen der Vulkanisierform wird die Heizbalgrohlingsmasse des vorgefertigten schichtenweise aufgebauten Heizbalgrohlings (die der Vulkanisierformwandung zugewandten Seite des vorgefertigten Heizbalgrohlings) im wesentlichen an die Wandungen der Vulkanisierform gepreßt, so daß eine nahezu gleichmäßige Bedeckung der Vulkanisierformwandungen mit der zuerst eingepreßten Heizbalgrohlingsmasse des Heizbalgrohlings erfolgt. Die nahezu gleichmäßige Bedeckung der Vulkanisierformwandung mit der zuerst eingepreßten Heizbalgrohlingsmasse geschieht in der Art, daß in Anfangsstadium des Preßvorganges in unmittelbarer Nähe des Heizbalgrohlings der Hohlraum der Vulkanisierform voll mit der zuerst eingebrachten Rohlingsmasse ausgefüllt ist und im weiteren Verlauf des Preßvorgangs sich diese Schicht entlang der Vulkanisierformwandungen (Wandung des Metallkerns und Wandung der oberen bzw. unteren Formenhälfte) bewegt und diese letztendlich bedecken. Als besonders vorteilhaft hat sich eine Wandbedeckungsstärke der zuerst eingebrachten Heizbalgrohlingsmasse von mindestens 0,05 mm erwiesen. Jede weitere eingepreßte Heizbalgrohlingsmasse lagert sich als Schicht auf die Schicht, die durch die vorher eingebrachte Heizbalgrohlingsmasse gebildet wird, nahezu gleichmäßig an.

Durch die Wahl der Anordnung der Kautschukmischungen (Heizbalgrohlingsmassen) im vorgefertigten Heizbalgrohling, können gezielt aufgebaute Heizbälge hergestellt werden, deren Eigenschaften vorherbestimmt werden können.
Im folgenden Ausführungsbeispiel sind zwei Mischungen auf Butylkautschukbasis angegeben, die sich besonders für den erfindungsgemäßen radialen Schichtaufbau für Heizbälge eignen:

| **Mischungszusammensetzung [pphr]** | **Mischung A** | **Mischung B** |
|---|---|---|
| Butylkautschuk Doppelbindungsanteil 0,7 mol-% | 95 | - |
| Butylkautschuk Doppelbindungsanteil 1,6 mol-% | - | 95 |
| Neoprenkautschuk | 5 | 5 |
| HAF-Ruß | 50 | 50 |
| Rizinusöl | 5 | 5 |
| Zinkweiß | 5 | 5 |
| Vulkanisationsharz | 10 | 10 |
| **Mooney-Viskosität** ML 1+3 100°C | 72 | 89 |

| **Rheometer** 190°C [min] | | |
|---|---|---|
| t5 | 2,7 | 2,4 |
| t50 | 11,4 | 9,4 |
| t90 | 29,4 | 26,9 |

| **Physikalische Daten** (60 min, 7,3 bar) | | |
|---|---|---|
| Dichte [g/cm ] | 1,12 | 1,12 |
| Zugfestigkeit [N/mm ] | 9,3 | 10,7 |
| Bruchdehnung [%] | 790 | 730 |
| Modul 300 % [N/mm ] | 3,1 | 4,4 |
| Härte [°ShA] | 61 | 60 |

| **Zugverformungsrest** [%] | | |
|---|---|---|
| Raumtemp. | 11 | 7 |
| 70 °C | 20 | 11 |
| 100 °C | 30 | 19 |

Durch die unterschiedlichen Doppelbindungsanteile des Butylkautschuks erhalten die entsprechenden Mischungen verschiedene Eigenschaften (z.B. im Fließverhalten). Die unter A angegebene Mischung besitzt ein gutes Fließverhalten. Eine solche Mischung eignet sich besonders für eine radial innere und/oder radial äußere Schicht eines Heizbalges. Durch das bereits beschriebene Verhalten der Kautschukmischungen während des Vulkanisiervorganges bei der Herstellung von Heizbälgen wird deutlich, daß die Mischung A sowohl die radial innere als auch die radial äußere Schicht des Heizbalges bilden kann. Durch die gute Dehnfähigkeit dieser Mischung wird bei der Vulkanisation z.B. von Reifen der Reifenrohling exakter in die Reifenvulkanisierform gepreßt und damit der Reifen besser ausgeformt.Als radial innere Schicht kann sie das Druckmedium optimal aufnehmen, da sie bei den herrschenden Vulkanisationstemperaturen besonders dehnfähig ist und somit der angelegte Druck während der Vulkanisation gut ausgenutzt wird, was wirtschaftliche Vorteile mit sich bringt. Des weiteren weist die Mischung A einen geringeren Doppelbindungsanteil auf als die Mischung B und ist somit weniger befähigt mit Schwefel zu reagieren, was sich besonders günstig bei der radial äußeren Schicht des Heizbalges bemerkbar macht. Der während der Vulkanisation von Reifen oder Luftfedern diffundierende Schwefel wird demzufolge vom Heizbalg nicht aufgenommen und deshalb wird ein vorzeitiges Altern des Heizbalges verhindert.
Die Schicht B ist als Schicht zwischen der radial inneren und radial äußeren Schicht geeignet, da sie gute Druck- und Zugverformungseigenschaften aufweist.

Um einen Heizbalg mit möglichst exakten Eigenschaften erzeugen zu können, ist es erforderlich, den Heizbalgrohling mit definierten Abmessungen (Schichtbreiten) an Kautschukmischungen bereitzustellen.

In dem folgenden Ausführungsbeispiel soll schematisch anhand der Zeichnung das Prinzip der erfindungsgemäßen Heizbalgherstellung näher erläutert werden.

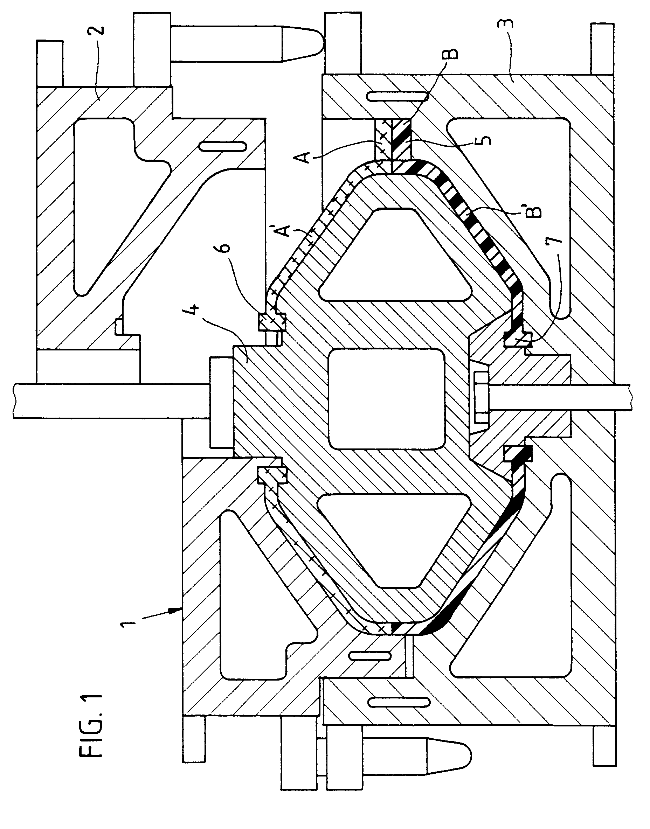

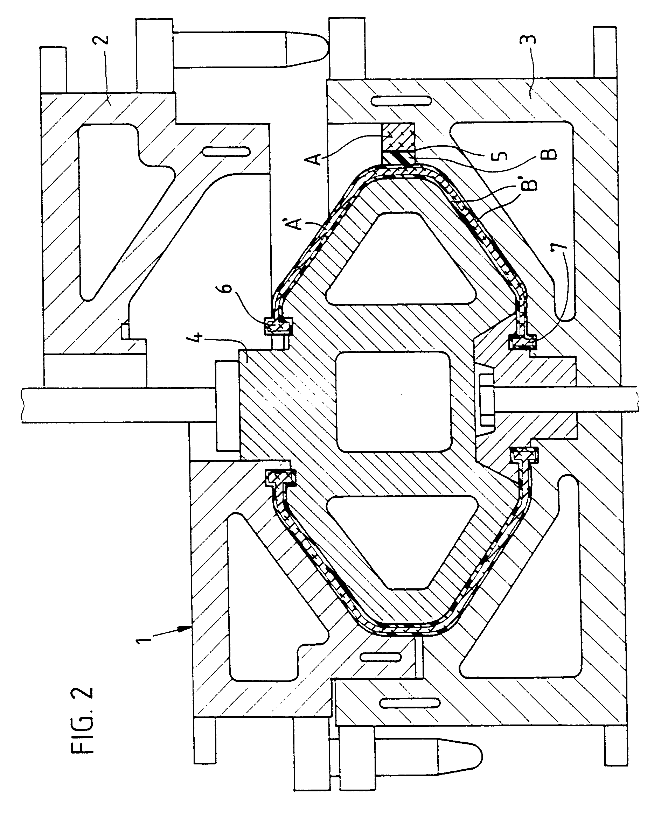

Die Figuren 1 und 2 sind radiale Schnitte durch die Vulkanisierform mit einem eingelegten Heizbalgrohling.

Die Vulkanisierform 1 weist eine obere und eine untere Formhälfte 2, 3 sowie einen Metallkern 4 auf.

Die Figur 1 zeigt den durch ein Extrusionsverfahren hergestellten, aus den Kautschukmischungen (Heizbalgrohlingsmassen) A und B aufgebauten Heizbalgrohling 5, der als strangförmiger Körper mit einem im wesentlichen rechteckförmigen Querschnitt in die untere Hälfte 3 der Vulkanisierform 1 eingelegt wird.

Die Kautschukmischungen A und B liegen horizontal parallel zueinander und werden durch den Schließdruck, der beim Herunterlassen der oberen Vulkanisierformhälfte 2 auf den Heizbalgrohling 5 erzeugt wird in den Hohlraum der Vulkanisierform 1 gepreßt. Durch den auf die plastischen Kautschukmischungen A und B einwirkenden Druck sowie Temperatur und Zeit werden diese gummielastisch (Schichten A' und B'). Die Schicht A' verteilt sich im wesentlichen entlangder Wandung des Metallkerns 4 und der Wandung der oberen Formenhälfte 2 der Vulkanisierform 1 und bleibt an diesen Wandungen haften, die Schicht B' verhält sich entsprechend in Richtung untere Hälfte 3 der Vulkanisierform 1, d.h. die Schicht B' verteilt sich entlang der Wandung des Metallkerns 4 und der Wandung der unteren Formenhälfte 3. Der vulkanisierte Heizbalg ist demzufolge aus zwei von oben nach unten angeordneten Schichten A' und B' aufgebaut, wobei die Schicht A' im wesentlichen den oberen Wulstbereich 6 und die Schicht B' im wesentlichen den unteren Wulstbereich 7 des vulkanisierten Heizbalges bildet.
Die Mischung A' ist eine vulkanisierte Butylkautschukmischung mit herkömmlichen Eigenschaften, und die Mischung B' besitzt eine ausgezeichnete Hochtemperaturdehnfähigkeit, damit während des Entformvorganges der vulkanisierte Heizbalg über den Metallkern der Vulkanisierform gezogen werden kann, ohne daß der Wulstbereich beschädigt wird.

Die Figur 2 unterscheidet sich von der Figur 1 dahingehend, daß der vorgefertigte Heizbalgrohling 5 aus den plastischen Kautschukmischungen (Heizbalgrohlingsmassen) A und B gefertigt ist, die vertikal parallel zueinander liegen.
Durch Schließen der Vulkanisierform wird zuerst die Kautschukmischung B in die Vulkanisierform 1 eingebracht und gelangt zu den Wandungen der oberen bzw. unteren Formenhälfte (2 bzw. 3) und des Metallkerns 4 an denen die Kautschukmischung B' mit einer Stärke von etwa 0,05 mm letztendlich haftet. Durch genaues Einstellen der Herstellungsbedingungen wie z.B. der Heizbalgrohlingsmassenbreite des vorgefertigten Heizbalgrohlings, Druck, Temperatur und mechanisch oder chemische Vorbehandlung der Vulkanisierformwandung ist es möglich, die Dicke und den Umfang der Kautschukbedeckung der Wandungen der Vulkanisierform zu variieren.
Zwischen die radial innere Schicht B' und der radial äußeren Schicht B' wird durch den weiteren Preßvorgang die Schicht A' eingebracht, die im unvulkanisierten Rohling 5 die Kautschukmischung A darstellt.
Die zuerst in den Hohlraum der Vulkanisierform 1 eingebrachte Kautschukmischung B bildet beim fertigen Heizbalg die radial innere und äußere Schicht B'(Mischungszusammensetzung siehe Mischung A), also mit der Eigenschaften einer guten Dehnfähigkeit und Schwefelresistenz und die Schicht A'(Mischungszusammensetzung siehe Mischung B), ist die Schicht, die sich zwischen der radial inneren und der radial äußeren Schicht B' befindet und gute Zug- und Druckverformungseigenschaften aufweist.

## Patentansprüche

1. Heizbalg aus Gummi für die Vulkanisation von Reifen oder Luftfedern, dadurch gekennzeichnet, daß der Heizbalg aus mindestens zwei verschiedenen Schichten aus Gummi aufgebaut ist.

2. Heizbalg nach Anspruch 1, dadurch gekennzeichnet, daß die obere und die untere Hälfte des Heizbalges aus zwei verschiedenen Schichten aus Gummi aufgebaut sind.

3. Heizbalg nach Anspruch 2, dadurch gekennzeichnet, daß zumindest im Wulstbereich einer Heizbalghälfte der Heizbalg aus einer Schicht hochtemperaturdehnfähigem Gummi besteht.

4. Heizbalg nach Anspruch 1, dadurch gekennzeichnet, daß die verschiedenen Schichten in radialer Richtung zueinander verlaufen.

5. Heizbalg nach Anspruch 4, dadurch gekennzeichnet, daß die radial innere Schicht und/oder die radial äußere Schicht aus hochtemperaturdehnfähigem Gummi und/oder hitzebeständigem und/oder wasser- und/oder dampfundurchlässigem oder -resistentem und/oder schwefeiresistentem Gummi besteht.

6. Heizbalg nach Anspruch 5, dadurch gekennzeichnet, daß die Schicht zwischen der radial inneren und der radial äußeren Schicht aus Gummi mit guten Zug- und Druckverformungseigenschaften besteht.

7. Verfahren zur Herstellung eines Heizbalges aus Gummi für die Vulkanisation von Reifen oder Luftfedern nach Anspruch 1, **dadurch gekennzeichnet**, daß der Heizbalgrohling aus mindestens zwei verschiedenen Kautschukmischungen schichtenweise konfektioniert wird, dieser Heizbalgrohling ringförmig in die Vulkanisierform gelegt wird, danach die Vulkanisierform geschlossen wird, wobei aufgrund der Schließkräfte die Heizbalgrohlingsmasse in den Vulkanisierformhohlraum gedrückt wird und sich dabei im wesentlichen an den Wandungen des Metallkerns und/oder der Formenhälften anlagert, wodurch ein schichtenweiser Aufbau des Heizbalges erfolgt, und daß der Heizbalg anschließend ausvulkanisiert wird.

8. Verfahren nach Anspruch 7, dadurch gekennzeichnet, daß die Wandungen des Metallkerns und/oder der Formenhälften der Vulkanisierform mit einer Stärke von mindestens 0,05 mm mit der zuerst eingebrachten Heizbalgrohlingsmasse bedeckt wird.
